# EUROPEAN PATENT SPECIFICATION

(11) **EP 1 799 874 B1**
(45) Date of publication and mention of the grant of the patent: **29.08.2012**
(21) Application number: 05796870.3
(22) Date of filing: 09.09.2005
(51) Int. Cl.: H01M 4/02, C22C 30/00

(54) **HYDROGEN STORAGE ALLOYS HAVING REDUCED PCT HYSTERESIS**
WASSERSTOFFSPEICHERLEGIERUNGEN MIT VERRINGERTER PCT-HYSTERESE
ALLIAGES POUR LE STOCKAGE D'HYDROGENE A HYSTERESIS PCT REDUITE

(30) Priority: 16.09.2004 US 942178
(43) Date of publication of application: 27.06.2007
(60) Divisional application: 12173271.3
(73) Proprietor: Ovonic Battery Company, Inc., Rochester Hills, Michigan 48309 (US)
(72) Inventor: YOUNG, Kwo, Troy, MI 48085 (US); FETCENKO, Michael, A., Rochester, MI 48307 (US); OVSHINSKY, Stanford, R., Bloomfield Hills, MI 48304 (US); OUCHI, Taihei, Rochester, MI 48306 (US); LI, Feng, Troy, MI 48084 (US); REINHOUT, Melanie, Shelby Twp, MI 48316 (US)
(74) Representative: Pautex Schneider, Nicole Véronique
(86) International application number: PCT/US2005/032076
(87) International publication number: WO 2006/033847

(56) References cited:
- JP-A- 2001 316 744
- JP-A- 2002 069 554
- JP-A- 2002 105 563
- JP-A- 2002 105 564
- JP-A- 2002 164 045
- US-A- 4 110 515
- US-A- 5 840 440
- US-A1- 2004 134 569
- US-B1- 6 322 926

## Description

### Field of the Invention

The present invention relates generally to hydrogen storage alloys mainly of the either Ce₂Ni₇ or Nd₂Ni₇ or mixture of both crystal structures. More specifically the present invention relates to A₂B₇ hydrogen storage alloys having increased capacity and cycle life, as well as reduced pulverization via reduced PCT hysteresis. This is achieved by adding one or combinations of several elemental modifiers having atomic volume of less than about 8 cm³/mole.

### Background of the Invention

Consumer and industrial applications continue to drive demand for new and efficient batteries for use as energy sources. Important goals include obtaining ever more power from increasingly smaller battery packages in an environmentally respectful fashion. Envisioned applications for batteries include everything from mobile electronics to electric and hybrid electric vehicles, Portability, rechargeability over a large number of cycles, low cost, high power, lightweight and consistent performance over widely varying loads and temperatures are among the key attributes required for batteries. The specific combination of battery performance requirements varies widely with the intended application and the battery components and materials are typically optimized accordingly. Portable electric devices such as digital cameras demand higher and higher energy to extend run-time and therefore higher capacity hydride alloys provide higher energy Ni-MH batteries.

An important developing application area for rechargeable batteries is electric vehicles (EV) and hybrid electric vehicles (HEV). In these applications, the battery must have the ability to provide high currents in short time periods in order to achieve effective acceleration. High discharge rates are therefore necessary. High battery power over extended time periods are also needed so that vehicles of reasonable size and weight can be maintained in motion for reasonable time intervals without recharging. Rapid recharging over many cycles should also be possible using readily available electrical power sources. The preferred cycle life profile also requires a high number of charge/discharge cycles at a shallow depth of charge/discharge. Progress has been made in the development of batteries for HEV applications and a few HEV automobiles have recently been made available to the U.S. public. Nonetheless, the batteries used in these automobiles represent compromises and trade offs in relevant performance parameters and new developments are needed to further the capabilities of HEV and EV products.

Nickel metal hydride batteries have emerged as the leading class of rechargeable batteries and are replacing earlier generation nickel cadmium batteries in many applications. Relative to nickel cadmium batteries, nickel metal hydride batteries avoid significant environmental problems (due to the toxicity of cadmium) while providing higher energy densities. HEV and EV products are examples of applications that utilize the high energy and power available from nickel metal hydride batteries and are also applications viewed to be impractical for nickel cadmium due to the disposal problems associated with cadmium. Expanded performance of HEV and EV products and the future extension of rechargeable batteries to new applications in the future will greatly depend on improvements in the capabilities of nickel metal hydride batteries.

Nickel metal hydride batteries typically include a nickel hydroxide positive electrode, a negative electrode that incorporates a metal containing hydrogen storage alloy, a separator made from nylon, polypropylene or other polymers, and an aqueous alkaline electrolyte. The positive and negative electrodes are housed in adjoining battery compartments that are typically separated by a non woven, felled, nylon or polypropylene separator. Several batteries may also be combined in parallel or series to form larger battery packs capable of providing higher powers, voltages or discharge rates.

The charging and discharging reactions of nickel metal hydride batteries have been discussed in the art and may be summarized as shown below:
Charging:
   positive electrode: NI(OH)₂ + OH- Ω NiOOH + H₂O + e⁻
   negative electrode: M + H₂O + e⁻ Ω MH + OH⁻
Discharging
   positive electrode: NiOOH + H₂O + e⁻ Ω Ni(OH)₂ + OH⁻
   negative electrode: MH + OH⁻ Ω M + H₂O + e⁻

Much work has been completed over the past decade to improve the performance of nickel metal hydride batteries. Optimization of the batteries ultimately depends on controlling the rate, extent and efficiency of the charging and discharging reactions. Factors relevant to battery performance include the physical state, chemical composition, catalytic activity and other properties of the positive and negative electrode materials, the composition and concentration of the electrolyte, the separator, the operating conditions, and external environmental factors. Various factors related to the performance of the positive nickel hydroxide electrodes have been considered, for example, in U.S. Pat. Nos. 5,348,822; 5,637,423; 5,905,003; 5,948,564; and 6,228,535 by the instant assignee, the disclosures of which are hereby incorporated by reference.

Work on suitable negative electrode materials has focused on intermetallic compounds as hydrogen storage alloys since the late 1950's when it was determined that the compound TiNi reversibly absorbed and desorbed hydrogen. Subsequent work has shown that intermetallic compounds having the general formulas AB, AB2 A2B and AB5, where A is a hydride forming element and B is a weak or non hydride forming element, are able to reversibly absorb and desorb hydrogen.

More recently a new type of alloy has been introduced for use in electrochemical cells. This alloy material has an A₂B₇ microstructure. A typical alloy having this microstructure contains misch metal, magnesium and nickel. This microstructure is formed by simple stacking of AB₅ unit cells and AB₂ unit cells. The AB₅ cells contain misch metal and nickel, while the AB₂ cells also contain magnesium. Examples of A₂B₇ alloys can be found in JP 2002-69554; JP 2002-83593; JP 2002-105564; JP 2002-105563; and JP 2002-164045.

Multi-component, multi-phase, electrochemical hydrogen storage alloys incorporating magnesium were first disclosed in U.S. Patents 5,506,069 ('069). 5,554,456 ('456), and 5,616,432 ('432).

In the '069 patent, the invention used MgNi as the basis to develop a new family of negative electrode materials. This work required an analytical approach on different levels. First, the inventors sought multi-orbital modifiers, for example transition elements, that would provide a greatly increased number of storage sites due to the various bonding configurations available in order to produce an increase in energy density. Second, the inventors had to look for modifiers and methods that would stabilize Mg as well as provide sufficient balance to the passivation/corrosion characteristics of the resulting alloy. This is because unrestrained corrosion lead to poor cycle life and passivation resulted in low capacity, poor discharge rate performance, and poor cycle life.

Modification of MgNi materials is complicated because Mg does not have the tolerance for substitution that transition metals have. Further, MgNi based materials do not tolerate the wide latitude of precipitated phases formed during alloy solidification. In other words, alloys of the V-Ti-Zr-Ni or LaNi₅ type may precipitate as a multitude of crystallographic phases during solidification and still result in efficiently operating alloys capable of operating in an alkaline battery environment. This is problematic with MgNi based materials.

The MgNi host matrix materials of the '069 patent were, more specifically, high specific capacity electrochemical hydrogen storage alloys composed of a Base Alloy comprising a MgNi host matrix. This MgNi host matrix is an alloy of Mg and Ni in a preferred ratio of about 1:1. The Base Alloy of the '069 patent was modified by at least one modifier element chosen from the group consisting of Co, Mn, Al, Fe, Cu, Mo, W, Cr, V, Ti, Zr, Sn, La, Mm, and Ca where the total mass of the at least one modifier element was greater than 0.5, preferably 2.5, atomic percent and less than 30 atomic percent of the final composition.

The '432 patent advances the work of the '069 patent by including a substantial volume fraction of an amorphous, nanocrystalline and/or microcrystalline microstructure into the MgNi alloy. The '432 patent refers to that microstructure by the term "intermediate range order." It also describes the material by the nano-crystallites within the bulk of the alloy material which are typically about 10-50 Angstroms in size and more specifically 20-50 Angstroms in size. The '432 patent discloses that these nano-crystallites display special characteristics due to the unique topology, surface area to bulk ratio, unusual bonding configurations and enhanced number of active sites. Attributes of the electrochemical hydrogen storage alloys in the '069 and '432 patents are exceptionally high storage capacity (greater than 700 mAh/g) versus conventional alloys used in Ni-MH batteries (about 300-400 mAh/g). These alloys also demonstrated good rate capabilities. However, while improved cycle life over first generation Mg-Ni alloys was observed, cycle life advancements were still required.

In the '456 patent the invention of the '069 patent was further enhanced to provide non-uniform heterogeneous powder particles for the negative electrode of electrochemical cells. These powder particles included at least two separate and distinct hydrogen storage alloy systems which were distinguished by their respective composition and were preferably either be layered or encapsulated. The '456 patent built on the work of the '069 patent and described a new concept of combining at least two separate and distinct hydrogen storage alloys to produce non-uniform heterogeneous powder particles. The strategy of combining distinct hydrogen storage alloys permitted the formulation of negative electrode materials having a degree of passivation/corrosion optimization (and thus increases in performance) that was significantly greater than any previously formulated metal hydride negative electrode materials. The most preferred heterogeneous powder particles were formed from Ovonic MgNi based alloy (as described in the '069 patent) and at least one Ovonic TiNi type or LaNi₅ type hydrogen storage alloy.

The '069, '432, and '456 patents were strongly focused on "protecting the magnesium from oxidation" by various methods including alloying, structural modification, encapsulation and the close proximity to another phase acting as a storage phase/catalyst phase funnel for hydrogen. Despite the excellent overall performance of these magnesium based alloys and heterogeneous composite powders, reduced cycle life, due to the strong affinity for magnesium oxidation, has still been a concern.

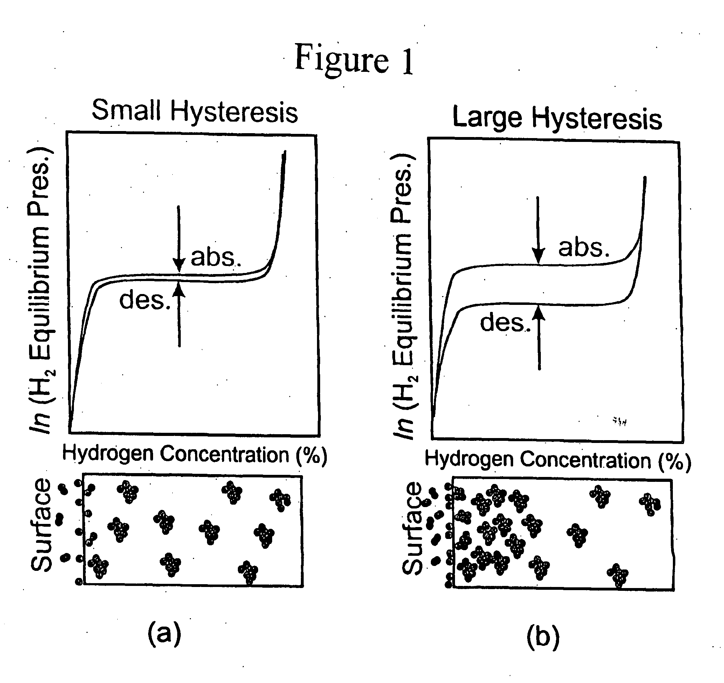

The new A₂B₇ alloys have found a way to add magnesium to conventional hydrogen storage alloys which raises the capacity of the conventional alloy and yet protect the magnesium from oxidation. Unfortunately, the prior art A₂B₇ alloys suffer from excessive hydrogen absorption/desorption hysteresis. The instant inventors believe that hysteresis effects are detrimental to the long term cycling stability of metal hydride materials and that materials that exhibit large hysteresis effects are more susceptible to premature failing on repeated cycling. The reasoning underlying the instant inventors belief that hysteresis is detrimental can be described with reference to Figure 1, which shows schematic examples of PCT curves exhibiting small and large hysteresis. Beneath each PCT curve is a depiction of the distribution of hydrogen in the metal hydride material, where surface and absorbed hydrogen are shown as dark circles. The depiction of the absorbed hydrogen distribution shown in Figure 1 for small and large hysteresis materials is used as the basis for the following discussion.

In small hysteresis materials, the absorption and desorption isotherms are close to coinciding. Low hysteresis materials are characterized by an internal distribution of absorbed hydrogen that is nearly uniform throughout the material. The absorbed hydrogen concentration near the surface is close to the absorbed hydrogen concentration in the bulk (interior) of the material. In a large hysteresis material, in contrast, the concentration of absorbed hydrogen is less uniform, with the hydrogen concentration in the vicinity of the surface being greater than the hydrogen concentration in the bulk. In terms of concentration gradients, a large hysteresis material exhibits a large gradient in the concentration of absorbed hydrogen, while a small hysteresis material exhibits a small gradient in the concentration of absorbed hydrogen.

The large concentration gradient associated with a large hysteresis material is a manifestation of the greater difficulty associated with absorbing hydrogen into the material. Hydrogen absorption and desorption are governed by both thermodynamic and kinetic processes. Thermodynamics controls the equilibrium hydrogen concentration that can be stored in a metal hydride and determines the plateau pressure of a hydrogen storage alloy. Phenomenologically, thermodynamics is concerned with the free energy difference between the absorbed and unabsorbed states of the hydrogen storage material. Kinetics, on the other hand, is concerned with the activation barriers associated with the absorption (or desorption) of hydrogen. In order for hydrogen to become absorbed, hydrogen gas or an electrochemical hydrogen bearing species such as water must adsorb on the surface and dissociate into hydrogen atoms or ions that diffuse or migrate into the metal hydride material to occupy hydrogen storage sites. The diffusion or migration process involves motion of hydrogen within open regions (e.g. hopping among interstitial sites) of the metal hydride structure. Such motion is inhibited by the placement of lattice atoms of the metal hydride and is necessarily accompanied by an energy barrier. The initial penetration of hydrogen from the surface into the near surface portion of the interior of the metal hydride also has an energy barrier associated with it.

Large energy barriers inhibit the motion of hydrogen and act to reduce the uniformity of the absorbed hydrogen concentration within the metal hydride material. As more hydrogen is accumulated in the near surface region, the concentration gradient between the near surface region and the interior of the metal hydride increases, thereby providing a greater diffusive driving force for the motion of hydrogen toward the interior of the metal hydride. The establishment of a large concentration gradient thus facilitates an overcoming of the kinetic barriers to hydrogen motion. Large hysteresis materials possess greater activation barriers to hydrogen motion than small hysteresis materials and thus exhibit larger concentration gradients in absorbed hydrogen.

In terms of cycle life stability and long cycle life, large hysteresis is undesirable because large gradients in the absorbed hydrogen concentration tend to promote pulverization or spalling effects upon repeated cycling. It is known in the art that the absorption of hydrogen in a metal hydride material is accompanied by an expansion of the metal hydride lattice volume as the atoms of the metal hydride are repositioned to accommodate absorbed hydrogen. The magnitude of the lattice expansion depends on the alloy composition and ranges from small to large. (See, for example, the article entitled The correlation between composition and electrochemical properties of metal hydride electrodes" by J.J. Reilly et al. appearing in the Journal of Alloys and Compounds, vol. 293 295, p. 569 582 (1999).)

The effect of lattice expansion on the cycle life characteristics is expected to differ for small and large hysteresis metal hydride materials. In small hysteresis materials, the absorbed hydrogen is more nearly uniformly distributed throughout the lattice of the metal hydride material so that lattice expansion occurs substantially uniformly throughout the material. In large hysteresis materials, the absorbed hydrogen exhibits a significant concentration gradient so that the concentration of hydrogen in some portions of the material is much different than the concentration in other portions of the material. As a result, lattice expansion effects occur non uniformly as regions of high absorbed hydrogen concentration expand to a greater degree than regions of low absorbed hydrogen concentration. A differential lattice expansion occurs due to the concentration gradient as high concentration regions expand more than low concentration regions.

Differential lattice expansion is detrimental to cycle life because it introduces internal stresses into the metal hydride lattice. A difference in lattice constants between adjacent regions of a metal hydride material causes a stress to form at the interface between those regions. The stress is due to a mismatch in lattice parameters as the preferred atomic positions in the neighboring regions differ due to a difference in absorbed hydrogen concentration. The greater is the difference in lattice constants, the greater the stress is. A metal hydride material is able to support stresses up to a maximum value that is characteristic of the material. The material accommodates or relieves the stress through distortions in atomic positions from their thermodynamically preferred locations. If the stress exceeds this stress limit, the metal hydride material is unable to support the stress and relieves the stress by fracturing. The instant inventors believe that this fracturing is the cause of the particle size pulverization that occurs in large hysteresis metal hydride materials upon cycling. Repeated cycling causes the repeated creation and elimination of internal stresses that, over time, fatigue the metal hydride material and progressively degrade the average particle size.

Therefore, although A₂B₇ Mg mischmetal based alloys show higher storage capacity than commercially viable AB₅ alloys, the PCT hysteresis of prior art A₂B₇ alloys is too high for battery applications, taking into consideration both the mid point voltage and cycle life performance. Thus, there is a need in the art for A₂B₇ alloys with reduced hydrogen absorption/desorption hysteresis to increase the cycle life thereof.

### Summary of the Invention

The present invention which is given in the claims is a modified A₂B₇ type hydrogen storage alloy having reduced PCT absorption/desorption hysteresis. The alloy consists of a base AₓB_{y} hydrogen storage alloy, where A includes at least one rare earth element and also includes magnesium, B includes at least nickel, and the atomic ratio of x to y is between 1:2 and 1:5 and preferably is between 1:3 and 1:4. The base alloy is modified by the addition of at least one modifier element which has an atomic volume less than about 8 cm³/mole, and is added to the base alloy in an amount sufficient to reduce the absorption/desorption hysteresis of the alloy by at least 10% when compared with the base alloy. More preferably the modifier element is added to said base alloy in an amount sufficient to reduce the absorption/desorption hysteresis of the alloy by at least 20% and most preferably by 40% when compared with the base alloy.

The modifier element is one element selected from the group consisting of B, Co, Cu, Fe, Cr, and Mn, and is preferably B or Mn. The atomic ratio of nickel to modifier element is 50:1 to 200:1, more preferably 75:1 to 150:1. The at least one rare earth element may include at least one element selected from the group consisting of lanthanum, cerium, neodymium, and praseodymium, and may be misch metal. The atomic ratio of rare earth elements to magnesium in the A element is 5:1 to 6:1, more preferably 5.5:1 to 5.7:1. The B elements include aluminum, and the atomic ratio of nickel to aluminum in the B elements is 30:1 to 40:1, more preferably 33:1 to 35:1.

Additionally the invention includes An AₓB_{y} hydrogen storage alloy wherein: A includes at least one rare earth element and also includes magnesium, B includes at least nickel, the atomic ratio of x to y is between 1:2 and 1:5; and the surface of said alloy comprises catalytic metallic regions supported in a highly porous oxide support matrix. The catalytic metallic regions may be nickel or nickel alloy. The catalytic metallic regions may average about 50-70 Δ in diameter and distributed throughout the oxide interface varying in proximity from 2-300 Δ from region to region. More preferably, the catalytic metallic regions average about 50-70 Δ in diameter and are distributed throughout the oxide interface varying in proximity from 50-100 Δ, from region to region.

Alternatively, the catalytic metallic regions are 10-50 Δ preferably 10-40 Δ and more preferably 10-30 Δ in diameter. Most preferably the catalytic metallic regions are 10-20 Δ in diameter and vary in proximity from 10-20 Δ, from region to region. The alloy may further contain a microstructure tuning element such as Cu, Fe, or Zn.

### Brief Description of the Figures

Figure 1 depicts the absorbed hydrogen distribution for small and large hysteresis materials;
Figure 2, is a plot of the XRD spectra of prior art samples A1 (curve a), A2 (curve b) and inventive sample A3 (curve c), the spectra specifically show that all three samples contain mainly A₂B₇ phases (including both Ce₂Ni₇ and La₂Nh structures); and
Figures 3a-3c are PCT isotherms taken at 30 C for prior art samples A1 (figure 3a), A2 (figure 3b) and inventive sample A3 (figure 3c), the number inserted in each graph is the PCT hysteresis (In (Pₐ/P_{d})) at 0.5% hydrogen storage.

### Detailed Description of the Invention

The present inventors have found that basic A₂B₇ alloys can be modified to have reduced hysteresis by the addition of elements which have a relatively small atomic volumes. That is, modifier elements that have larger atomic volumes while increasing the degree of disorder also block the hydrogen diffusion path within the alloy. Modifier elements with smaller atomic volume, increase both the degree of disorder and hydrogen diffusion capability.

The base alloy which is modified by the present invention is an AₓB_{y} hydrogen storage alloy. The "A" elements include both of 1) at least one rare earth element; and 2) magnesium. The at least one rare earth element is misch metal. The "B" elements include at least nickel. The "B" elements further include aluminum. The at least one rare earth element is include misch metal. Preferred rare earth elements may include lanthanum, cerium, neodymium, and praseodymium. The atomic ratio of x to y is between 1:2 and 1:5 and preferably between 1:3 and 1:4. Most preferably, the atomic ratio of x to y may be between 1:3.3 and 1:3.6. The atomic ratio of rare earth elements to magnesium in the A elements is 5:1 to 6:1 and more preferably may be 5.5:1 to 5.7:1. The atomic ratio of nickel to aluminum in the B elements may be 30:1 to 40:1 and preferably may be 33:1 to 35:1.

Table 1 is a list of common modifier elements showing their atomic volumes. The inventors have found that elements such as B, Co, Cu, Fe, Cr, and Mn (i.e. elements having an atomic volume less than 8 cm³/mole) are useful as the hysteresis reducing modifier elements for A₂B₇ alloys their relatively small size. The modifier element(s) should be added in a sufficient quantity to significantly reduce the hysteresis of the modified base alloy when compared to the unmodified alloy. By "significantly reduce", the inventors mean by at least 10% over the unmodified base alloy. More preferably the inventors mean by at least 20% and most preferably the inventors mean by at least 40%. In the alloy structure, the modifier element(s) are "B" elements. The atomic ratio of nickel to modifier element is in the range of 50:1 to 200:1 and more preferably may be 75:1 to 150:1

**Table 1**

| Modifier Element | Atomic Volume (cm³/mole) |
|---|---|
| Boron | 4.6 |
| Cobalt | 6.7 |
| Copper | 7.1 |
| Iron | 7.1 |
| Chromium | 7.23 |
| Manganese | 7.49 |
| Zinc | 9.2 |
| Aluminum | 10.0 |
| Silicon | 12.1 |
| Zirconium | 14.1 |

The present inventors have prepared materials corresponding to the prior art, comparative examples and examples according to the present invention. The alloy designation, category, and composition of the alloys is presented in Table 2.

**Table 2**

| Alloy No. | Category | Composition |
|---|---|---|
| A1 | Prior Art | La_{0.85}Mg_{0.15}Ni_{3 34}Al_{0.1} |
| A2 | Prior Art | La_{0.21}Ce_{0.03}P_{0.15}Nd_{0.46}Mg_{0.15}Ni₃.₃₄Al_{0.1} |
| A3 | Inventive | La_{0.21}Ce_{0.03}Pr_{0.15}Nd_{0.48}Mg_{0.15}Ni_{3 34}Al_{0.1}B_{0.03} |
| A4 | Inventive | La_{0.21}Ce_{0.03}P_{0.15}Nd_{0.46}Mg_{0.15}Ni_{3.34}Al_{0.1}Mn_{0.03} |
| A5 | Comparative | La_{0.21}Ce_{0 03}Pr_{0.15}Nd_{0.46}Ni_{3 34}Al_{0.1}Si_{0.03} |
| A6 | Comparative | La_{0.21}Ce_{0 03}P_{0.15}Nd_{0.46}Mg_{0.15}Ni_{3.34}Al_{0.1}Zr_{0.03} |

Prior art composition A1 is one of the control samples and shows a large PCT hysteresis (see Table 3). Prior art composition A2, the second control sample, shows that replacing La with misch metal (La-Ce-Pr-Nd alloy) does improve the PCT hysteresis, but not enough. The inventive alloys, A3 (with B modifier) and A4 (with Mn modifier) significantly reduce the hysteresis. The comparative examples A5 (with Si modifier) and A6 (with Zr modifier) indicate that show that if the modifier atoms occupied too much volume, the PCT hysteresis will not be reduce to a satisfactory level, if at all.

### Sample Preparation

Industry grade raw materials having the nominal compositions indicated in Table 2 were mixed together and melted in an induction furnace under argon atmosphere. Once the entire mixture was melted, the melt was held at that temperature for 2 minutes for better homogeneity. The melt was cooled down to a lower temperature and poured into a carbon steel pancake mold. The sample was then annealed in a tube furnace at 1000 C for 5 hours to homogenize the composition. Small piece of the cooled ingots were taken for examination by scanning electron microscopy (SEM), x ray diffraction analysis (XRD), and gas phase pressure concentration isotherm study (PCT).

### The XRD Results

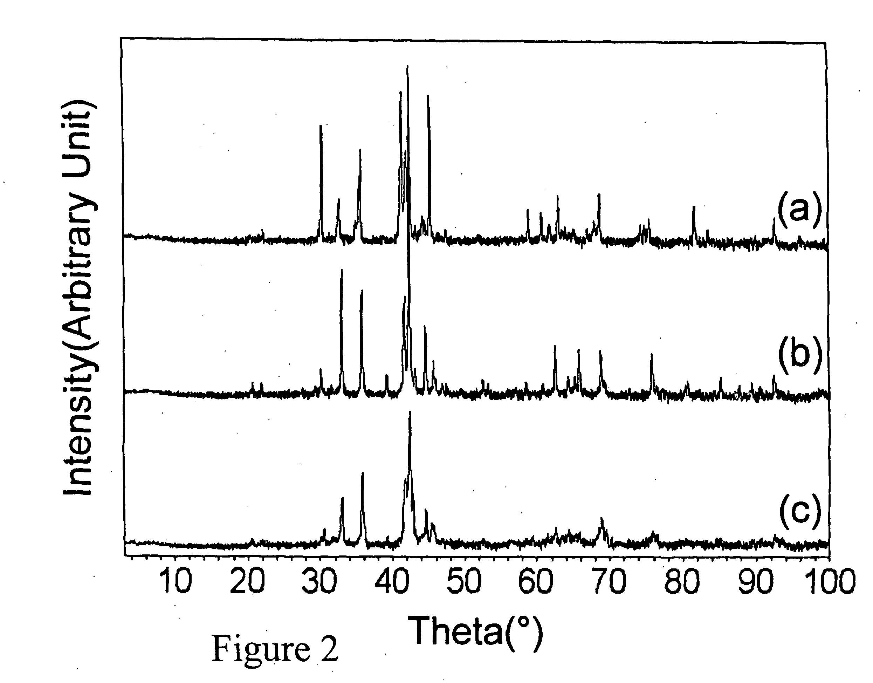

From XRD analysis, all samples are mainly A₂B₇, which includes both Ce₂Ni₇ and La₂Ni₇ structures. A clear peak between 32 and 34 2 theta angles shows the existence of A₂B₇ phase. The representative XRD spectra of prior art samples A1 (curve a), A2 (curve b) and inventive sample A3 (curve c) are plotted in Figure 2. The spectra specifically show that all three samples contain mainly A₂B₇ phases (including La₂Ni₇ structures for A1 and both Ce₂Ni₇ and La₂Ni₇ structures for A2 and A3).

### PCT measurement

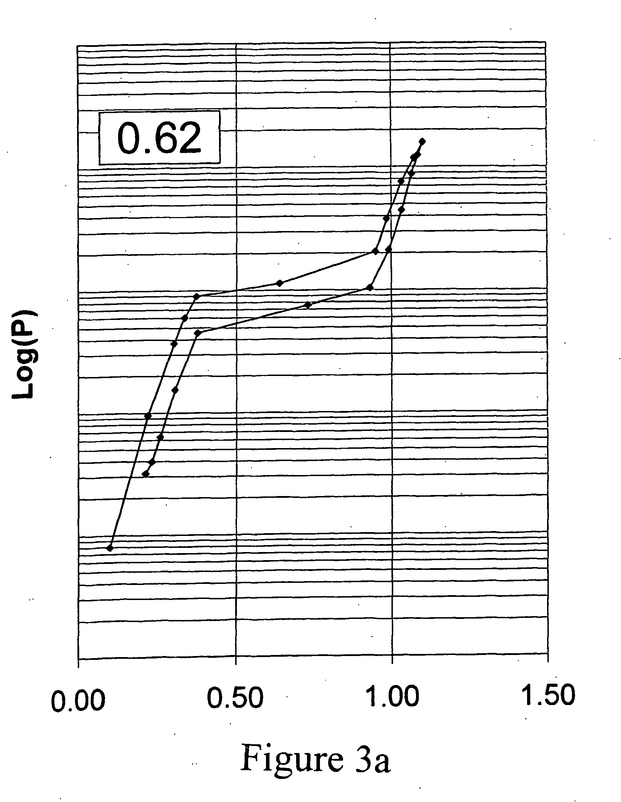

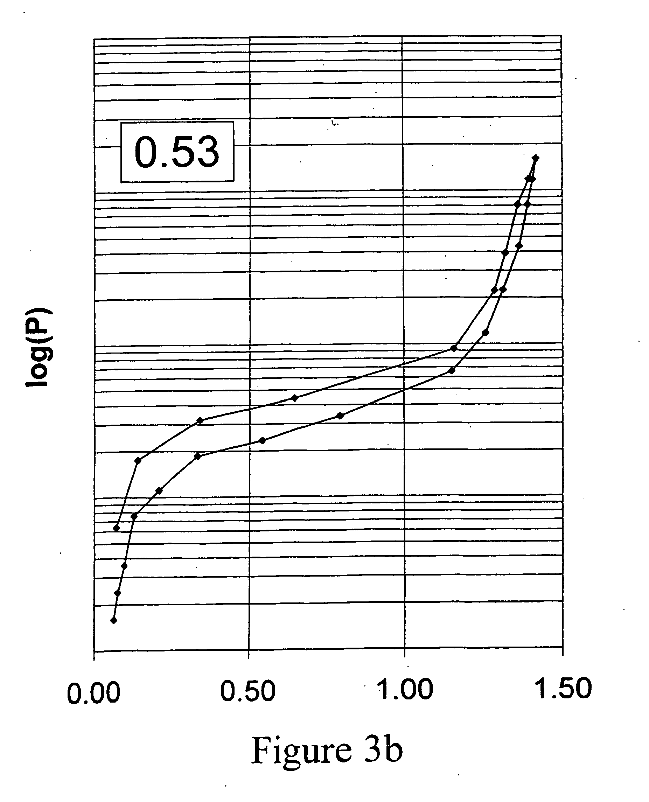

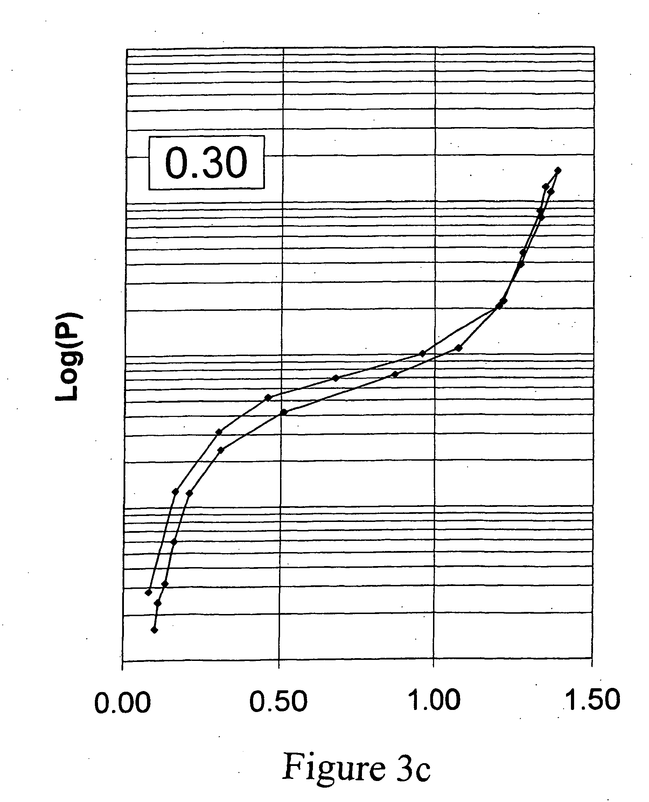

A PCT isotherm for each alloy was measured at 30 C and the absorption/desorption hysteresis was calculated from In (Pₐ/P_{d}), where Pₐ, P_{d} are the hydrogen absorption, desorption equilibrium pressure at a hydrogen concentration of 0.5 wt.%, respectively. The PCT hysteresis for each alloy is listed in Table 3. The prior art A1 sample shows a hysteresis of 0.62 which is very large and will yield a low power and low cycle life battery. The prior art A2 sample shows a hysteresis of 0.53, which is an improvement due to the replacement of La with misch metal (a combination of four rare earth elements) which increases the materials degree of disorder. Inventive samples A3 and A4 show reduced PCT hysteresis of 0.3 and 0.42, respectively. The Inventors have noted that as the atomic volume of the modifier increases, the PCT hysteresis increases as well, which was confirmed by comparative samples A5 and A6. Figures 3a-3c are PCT isotherms taken at 30 C for prior art samples A1 (figure 3a), A2 (figure 3b) and inventive sample A3(figure 3c), the number inserted in each graph is the PCT hysteresis (In (Pₐ/P_{d})) at 0.5% hydrogen storage.

**Table 3**

| Alloy No. | Category | PCT Hysteresis *In*(Pₐ/P_{d})^{@}0.5%H₂ |
|---|---|---|
| A1 | Prior Art | 0.62 |
| A2 | Prior Art | 0.53 |
| A3 | Inventive | 0.30 |
| A4 | Inventive | 0.42 |
| A5 | Comparative | 0.50 |
| A6 | Comparative | 0.88 |

### Magnetic susceptibility measurement

It is known that for an electrochemical hydrogen storage alloy to have good rate capability, the powder particles of the storage alloy must have a highly catalytic surface region. The earliest form of this catalytic surface was described in U.S. Patent 4,716,088 ('088). It was found that metal oxides at the electrode surface can decrease charging efficiency and promote hydrogen evolution. Overcoming the effects of metal oxides formed during electrode fabrication is crucial to the successful operation of metal hydride electrodes in sealed cell applications. The metal oxides are detrimental to sealed cell performance. First, oxides at the surface have been found to decrease charging efficiency and promote hydrogen evolution.

Another detrimental effect of metal oxides is the hindrance of new surface area formation. Upon successive charging and discharging cycles, the surface area of a metal hydride electrode can increase tremendously from the initial surface area after fabrication. The degree of surface area increase is related to the composition of the active material, but excessive levels of metal oxide can hinder surface area increase almost completely. Thus, the effects of initial surface oxide are especially important during the initial stages of cell activation. Besides lowering cell pressure by affecting current density, maximized surface area is also important for discharge rate capability and promoting electrode cycle life.

The inventors of the '088 patent found that even under careful fabrication conditions, such as described in U.S. Pat. No. 4,551,400, the hydrogen storage alloy metals are so sensitive to oxidation that metal oxide formation can be minimized but not easily eliminated. It was discovered that without any other treatment, electrodes fabricated under standard processing conditions, as previously described, have a surface oxide. The composition, thickness, and oxidation state of the surface oxide is variable. Factors which can influence the degree of oxidation include: the active material composition, the type of process used to prepare powder for electrodes prior to compaction, the particle size and surface area of the initial active material, the method of compacting the powder, and the method used to sinter the compacted powder. The degree of oxidation will generally increase with longer duration of atmospheric exposure. Generally, the higher the temperature during processing, the greater the likelihood of metal oxide formation. The invention of the '088 provided methods to overcome the effect of the initial oxidation resulting from material processing or fabrication. This method includes, prior to placing the negative electrode in a sealed cell, exposing the electrode to an alkaline solution to alter the nature of the oxides. This process, referred to as etching, alters the surface condition of the metal hydride electrode.

The etching partially removes surface oxides. It is believed that oxides which are formed during fabrication are relatively thin, but dense and extremely impermeable to hydrogen diffusion. By removing some of the soluble components of the surface oxide, it is believed that hydrogen diffusion is promoted, allowing improved electrochemical hydrogen transfer and charge acceptance. The surface oxide after etching can be thicker than that of the initial electrode, but by removal of the soluble components is more porous than oxides formed during fabrication. It may also be possible that oxides formed during etching form hydroxide complexes with the metals of the active material, rather than the less permeable oxides. Also, by selectively removing only a portion of the oxide layer, etching provides catalytic sites of nickel or nickel alloy metal, which are resistant to oxidation and very insoluble in potassium hydroxide electrolyte. It is believed that in addition to providing catalytic surfaces for the discharge reaction, the nickel being present in the metallic form provides a conductive element to the surface oxide. In effect, the nickel acts to balance the insulating qualities of oxides.

The catalytic surface of electrochemical hydrogen storage alloys were further improved with the advent of techniques and materials described in U.S. Patent No. 5,536,591 ('591). The '591 invention provides hydrogen storage alloy materials having a significant increase in the frequency of occurrence of the nickel catalytic regions, as well as a more pronounced localization of these regions. More specifically, the materials of the present invention have enriched nickel regions of 50-70 Δ in diameter distributed throughout the oxide interface and varying in proximity from 2-300 Δ, preferably 50-100 Δ, from region to region. This is illustrated in Figure 1 of the '591 patent, where the nickel regions 1 are shown as what appear as grains on the surface of the oxide interface 2 at 178,000 X. As a result of the increase in the frequency of occurrence of these nickel regions, the materials of the '591 patent exhibited significantly increased catalysis and conductivity.

In U.S. patents 6,270,719 and 6,740,448, the surface catalytic region was further enhanced and modified such that superior catalysis and high rate discharge performance could be achieved by one or more of the following:
1) the catalytic metallic sites of the alloys are formed from a nickel alloy such as NiMnCoTi rather than just Ni;
2) the catalytic metallic sites of the alloys are converted by elemental substitution to an FCC structure from the BCC structure of the prior art Ni sites;
3) the catalytic metallic sites of the alloys are much smaller in size (10-50, preferably 10-40, most preferably 10-30 Angstroms) than the Ni sites of the prior art alloys (50-70 Angstroms) and have a finer distribution (closer proximity);
4) the catalytic metallic sites of the alloys are surrounded by an oxide of a multivalent material (containing MnO.sub.x) which is believed to possibly be catalytic as well, as opposed to the ZrTi oxide which surrounded the prior art Ni sites;
5) the oxide could be multiphase with very small (10-20 Angstrom) Ni particles finely distributed in a MnCoTi oxide matrix;
6) the oxide may be a mix of fine and coarse grained oxides with finely dispersed catalytic metallic sites;
7) alloy modification with aluminum may suppress nucleation of large (50-70 Angstrom) catalytic metallic sites (at 100 Angstrom proximity) into a more desirable "catalytic cloud" (10-20 Angstroms in size and 10-20 Angstroms proximity); and
8) NiMn oxide is the predominant microcrystalline phase in the oxide and the catalytic metallic sites may be coated with NiMn oxide.

Further enhancement of the surface catalytic oxide interface region was achieved by the addition of a microstructure tuning element such as Cu, Fe, or Zn in copending U.S. Patent Application Serial No. 10/405,008 filed April 1, 2003. The microstructure tuning element provides preferentially etched alloy particles with interface regions that are highly porous and that include catalytic metallic particles. The microstructure of the surface region includes a large volume fraction of voids having spherical or channel-like shapes and are sufficiently open structurally to facilitate greater mobility of reactive species within the microstructure and in the vicinity of catalytic metallic particles. Greater accessibility to reactive sites accordingly results. The greater mobility of reactive species and/or the greater density of catalytic particles lead to faster kinetics and improved performance (e.g. higher power), especially at low operating temperatures.

It should be noted that magnetic susceptibility measurements can be used to detect the presence and size of the catalytic metallic particles in the surface catalytic regions of the etched hydrogen storage alloy particles and as such is a simple test to characterize such materials.

Ingots of the samples were pulverized by a hydride/dehydride process without mechanical grinding as described in U.S. Patent No. 6,120,936, entitled A METHOD FOR POWDER FORMATION OF A HYDROGEN STORAGE MATERIAL, herein incorporation by reference. The powder was activated at 100 EC in a 60% KOH alkaline bath for 2 hours.

The magnetic susceptibility of the samples was measured by a PMC alternating gradient magnetometer and the free metallic nickel size was estimated from the magnetic susceptibility (Ms) vs. applied magnetic field (H) plot. The results are summarized in Table 4. All of the inventive samples are similar in both the amount of metallic Ni and also the size of Ni cluster. This indicates that the amount of modifier that was added to the alloy does not affect its surface catalytic property and therefore the inventive samples maintain the high rate discharge capability of the prior art materials.

**Table 4**

| Alloy No. | Category | Signal (memu/g) | Ni cluster size (Δ) |
|---|---|---|---|
| A3 | Inventive | 6278 | 17 |
| A4 | Inventive | 4238 | 21 |
| A5 | Comparative | 6710 | 17 |
| A6 | Comparative | 4998 | 16 |

### Electrochemical measurement

Powder of 200 mesh or smaller of the samples was pressed onto a Ni mesh substrates without other conducting metal powder or inorganic additives. The electrochemical capacity of the alloy was determined by constructing a flooded full cell using grafted PE/PP separators, partially pre charged Ni(OH)₂ counter electrodes, and 30% KOH aqueous electrolyte. The cells were charged at a 0.15C rate for 10 hours and then discharge to 0.8 volts at a 0.15C current plus a 0.015C pull current. Results are summarized in Table 5. The alloys of the present invention, A3 and A4, have the highest capacities. The cycle life of the inventive samples are second only to sample A6 (Zr modifier) due to the fact that Zr forms oxides which are insoluble in the alkaline electrolyte solution and which protect the magnesium underneath from being oxidized.

**Table 5**

| Alloy No. | Category | Discharge capacity (mAh/g) | Cycle degradation C(10)/C(1) |
|---|---|---|---|
| A1 | Prior Art | 308 | 0.7987 |
| A2 | Prior Art | 343 | 0.8367 |
| A3 | Inventive | 356 | 0.882 |
| A4 | Inventive | 359 | 0.8607 |
| A5 | Comparative | 348 | 0.8132 |
| A6 | Comparative | 346 | 0.9249 |

## Claims

1. A modified A₂B₇ type hydrogen storage alloy having reduced hysteresis wherein said alloy consists of :
a) a base AₓB_{y} hydrogen storage alloy wherein :
A consists of mish metal as rare earth elements and magnesium, wherein the atomic ratio of rare earth elements to magnesium in the A elements is 5:1 to 6:1
B consists of nickel and aluminum, wherein the atomic ratio of nickel to aluminum in the B elements is 30:1 to 40:1 and
the atomic ratio of x to y is between 1:2 and 1:5; and
b) one modifier element wherein:
said modifier element is a modifier element having an atomic volume less than about 8 cm³/mole selected from B, Co, Cu, Fe, Cr and Mn, and
said modifier element is added to said base alloy in an amount sufficient to reduce the absorption/desorption hysteresis of the alloy by at least 10% when compared with the base alloy, and
the atomic ratio of said nickel to said modifier element is 50:1 to 200:1.

2. The modified A₂B₇ type hydrogen storage alloy according to claim 1, wherein said atomic ratio of x to y is between 1:3 and 1:4.

3. The modified A₂B₇, type hydrogen storage alloy according to claim 2, wherein said atomic ratio of x to y is between 1:3.3 and 1:3.6.

4. The modified A₂B₇ type hydrogen storage alloy according to claim 1, wherein the atomic ratio of nickel to modifier element is 75:1 to 150:1.

5. The modified A₂B₇ type hydrogen storage alloy according to claim 1, wherein the atomic ratio of rare earth elements to magnesium in the A elements is 5.5:1 to 5.7:1.

6. The modified A₂B₇ type hydrogen storage alloy according to claim 1, wherein the atomic ratio of nickel to aluminum in the B elements is 33:1 to 35:1.

## Patentansprüche

1. Modifizierte A₂B₇-Wasserstoffspeicherlegierung mit reduzierter Hysterese, wobei die Legierung aus Folgendem besteht:
a) einer AₓB_{y}-Wasserstoffspeichergrundlegierung, wobei:
A aus Mischmetall als Seltenerdelemente und Magnesium besteht, wobei das Atomverhältnis von Seltenerdelementen zu Magnesium in den A-Elementen 5:1 bis 6:1 ist,
B aus Nickel und Aluminium besteht, wobei das Atomverhältnis von Nickel zu Aluminium in den B-Elementen 30:1 bis 40:1 ist und
das Atomverhältnis von x zu y zwischen 1:2 und 1:5 ist, und
b) einem Modifiziererelement, wobei:
das Modifiziererelement ein Modifiziererelement mit einem Atomvolumen von unter ungefähr 8 cm'/mol, das aus B, Co, Cu, Fe, Cr und Mn ausgewählt ist, und
das Modifiziererelement der Grundlegierung in einer Menge zugesetzt ist, die zum Reduzieren des Absorptions/Desorptionshysterese der Legierung um zumindest 10% im Vergleich zur Grundlegierung genügt, und
das Atomverhältnis von dem Nickel zu dem Modifiziererelement 50:1 bis 200:1 ist.

2. Modifizierte A₂B₇ -Wasserstoffspeicherlegierung nach Anspruch 1, wobei das Atomverhältnis von x zu y zwischen 1:3 und 1:4 ist.

3. Modifizierte A₂B₇-Wasserstoffspeicherlegierung nach Anspruch 2, wobei das Atomverhältnis von x zu y zwischen 1:3,3 und 1:3,6 ist.

4. Modifizierte A₂B₇-Wasserstoffspeicherlegierung nach Anspruch 1, wobei das Atomverhältnis von Nickel zu Modifiziererelement 75:1 bis 150:1 ist.

5. Modifizierte A₂B₇-Wasserstoffspeicherlegierung nach Anspruch 1, wobei das Atomverhältnis von Seltenerdelementen zu Magnesium in den A-Elementen 5,5:1 bis 5,7:1 ist.

6. Modifizierte A₂B₇-Wasserstoffspeicherlegierung nach Anspruch 1, wobei das Atomverhältnis von Nickel zu Aluminium in den B-Elementen 33:1 bis 35:1 ist.

## Revendications

1. Alliage modifié de stockage d'hydrogéne du type A₂B₇ ayant une hystérésis réduite, où ledit alliage est constitué :
a) d'un alliage de base de stockage d'hydrogène du type AₓB_{y} où :
A est constitué d'un mischmétal tel que des éléments de terres rares et de magnésium,
où le rapport atomique des éléments de terres rares sur le magnésium dans les éléments de A est de 5:1 à 6:1
B est constitué de nickel et d'aluminium, où le rapport atomique de nickel sur aluminium dans les éléments de B est de 30:1 à 40:1 et
le rapport atomique de x sur y est compris entre 1:2 et 1:5 ; et
b) d'un élément modificateur où ;
ledit élément modificateur est un élément modificateur ayant un volume atomique inférieurs environ 8 cm³/mole choisi parmi le B, Co, Cu, Fe, Cr et le Mn, et
ledit élément modificateur est ajouté audit alliage de base en une quantité suffisante pour réduire l'hystérésis d'absorption/désorption de l'alliage d'au moins 10% par rapport à l'alliage de base, et
le rapport atomique dudit nickel sur ledit élément modificateur est de 50:1 à 200:1.

2. Alliage modifié de stockage d'hydrogéne du type A₂B₇ selon la revendication 1, dans lequel ledit rapport atomique de x sur y est compris entre 1:3 et 1:4.

3. Alliage modifié de stockage d'hydrogène du type A₂B₇ selon la revendication 2, dans lequel ledit rapport atomique de x sur y est compris entre 1:3,3 et 1:3,6.

4. Alliage modifié de stockage d'hydrogène du type A₂B₇ selon la revendication 1, dans lequel le rapport atomique du nickel sur l'élément modificateur est de 75:1 à 150:1.

5. Alliage modifié de stockage d'hydrogène du type A₂B₇ selon la revendication 1, dans lequel le rapport atomique des éléments de terres rares sur le magnésium dans les éléments de A est de 5,5:1 5,7:1.

6. Alliage modifié de stockage d'hydrogène du type A₂B₇ selon la revendication 1, dans lequel le rapport atomique du nickel sur l'aluminium dans les éléments de B est de 33:1 à 35:1.
